Europäisches Patentamt

European Patent Office

Office européen des brevets

(19)

(11) Numéro de publication: **0 044 236**
**B1**

# (12) FASCICULE DE BREVET EUROPEEN

(45) Date de publication du fascicule du brevet:
06.06.84

(21) Numéro de dépôt: **81401001.3**

(22) Date de dépôt: **22.06.81**

(51) Int. Cl.³: **C 01 B 33/20,** C 03 C 1/00,
C 03 C 3/04

(54) Procédé d'obtention de silicates métalliques à partir de solutions de silicates alcalins, application en verrerie.

(30) Priorité: 11.07.80 FR 8015460
11.02.81 FR 8102640

(43) Date de publication de la demande:
20.01.82 Bulletin 82/3

(45) Mention de la délivrance du brevet:
06.06.84 Bulletin 84/23

(84) Etats contractants désignés:
AT BE CH DE FR GB IT LI LU NL SE

(56) Documents cités:
WO - A - 78/00001
FR - A - 2 011 819
US - A - 2 386 337

(73) Titulaire: **RHONE-POULENC CHIMIE DE BASE, 25, quai Paul Doumer, F-92408 Courbevoie (FR)**

(72) Inventeur: **Richard, Christian, 28, avenue du Général Leclerc, F-58500 Clamecy (FR)**

(74) Mandataire: **Martin, Henri et al, RHONE-POULENC RECHERCHES Service Brevets Chimie et Polymères 25, quai Paul Doumer, F-92408 Courbevoie Cedex (FR)**

BUNDESDRUCKEREI BERLIN

## Description

La présente invention a pour objet un procédé pour la fabrication de silicates métalliques à partir de solutions de silicates alcalins. Elle a trait aussi à l'application de ce procédé notamment dans le domaine de la verrerie.

L'on sait préparer depuis longtemps des silices précipitées par action d'un agent d'acidification tels qu'acide minéral ou organique sur un silicate. L'on sait également préparer des silicates simples ou doubles par double décomposition.

Mais plusieurs problèmes soulèvent de grandes difficultés tant au niveau du produit que du procédé. Parmi ceux-ci, et sans être exhaustif, on peut citer la pureté, la granulométrie et la densité pour le produit, la facilité de mise en oeuvre, le choix des matériaux utilisés et les économies d'énergie pour le procédé.

Ainsi, dans le cas de la verrerie par exemple, et bien qu'il s'agisse d'une technique travaillée depuis longtemps, les compositions utilisées sont obtenues par fusion des divers ingrédients, ce qui outre les problèmes d'énergie et de mise en oeuvre dues à l'utilisation de hautes températures pendant un temps prolongé, pose de sérieux problèmes en ce qui a trait au contrôle des formulations pour verre, et en particulier de leur homogénéisation.

On a déjà proposé, dans le brevet français 844 133 déposé en 1938, pour abaisser la température de fusion et diminuer le temps de fusion, d'amener les constituants du mélange non sous forme de poudre solide, mais de les précipiter à partir de solutions, par des procédés chimiques appropriés.

Mais malheureusement, de tels procédés présentent à priori des difficultés résultant d'une part de l'élimination des sous produits et d'autre part, de la nécessité d'évaporer de grandes quantités d'eau.

Dans la demande de brevet européen publiée sous le numéro 15 794, au nom de la Demanderesse, on a déjà proposé un procédé faisant appel à des réactifs sous forme de solution selon lequel à partir d'une solution d'un silicate alcalin soluble, on réalise une substitution au moins partielle par au moins un oxyde d'un autre métal.

D'un point de vue pratique, ce procédé est mis en oeuvre à partir de solutions de sodium et/ou de potassium et l'attaque se fait au moyen d'un nitrate métallique, lequel peut être fabriqué par attaque de métal ou dissolution de l'oxyde ou hydroxyde métallique par l'acide nitrique. On obtient une composition amorphe et isotrope présentant un grand intérêt; mais le procédé néanmoins a l'inconvénient de conduire à une préparation des divers silicates métalliques entrant dans la composition, ce qui laisse supposer une dépense en énergie non négligeable.

Il est connu de l'US-A-2 386 337 un procédé de préparation de silice consistant à traiter une solution aqueuse de silicate de sodium par du méthanol, de manière à former de fines particules de silicate de sodium en suspension dans le méthanol, puis à acidifier la suspension de sorte à obtenir de la silice finement divisée.

Il est également connu par le FR-A-2 011 819 de précipiter un silicate alcalin, à partir de solutions du commerce de silicates alcalins, par addition de solvants organiques miscibles à l'eau, tels que le méthanol.

Enfin, on a décrit, dans le WO-A-78/00 001 un procédé de dépôt sur une membrane poreuse de silice, de silicates ou d'autres composés pouvant former des corps vitreux par mise en contact et réaction d'une solution acide avec une solution basique, la solution acide étant amenée au contact de la solution basique par diffusion au travers de la membrane poreuse, mais les liquides organiques mis en oeuvre sont utilisés comme solvants.

Or, maintenant, on a trouvé un procédé pour la préparation de silicate métallique d'un métal alcalin et d'au moins un autre métal, par réaction d'une solution aqueuse d'un silicate de métal alcalin et d'une solution de sel d'au moins un autre métal, caractérisé par le fait que la réaction est effectuée par mélange des deux solutions, sous agitation, en présence d'un liquide organique polaire miscible, de manière à amener le silicat en suspension dans le milieu organique.

Selon une première forme de mise en oeuvre, le liquide organique est apporté directement à la solution de silicate; le silicate sous forme insoluble ainsi obtenu peut être simplement séparé, éventuellement broyé.

Selon une autre forme de mise en oeuvre, le liquide organique est apporté d'abord à une solution de sels métalliques de manière à réaliser une solution organique notamment méthanolée desdits sels, à laquelle on ajoute ensuite la solution de silicate(s) alcalin(s).

On observe alors que l'on peut réaliser une addition rapide de la solution de silicate(s) dans la solution organique, telle que méthanolée de silicate de plomb par exemple.

On peut bien évidemment faire appel à des mises en oeuvre intermédiaires en faisant varier la nature des pieds de cuve et leur importance.

De manière générale, on forme une solution alcaline renfermant de la silice et une solution acide de sels de métaux correspondant au groupe des oxydes modificateurs: calcium, baryum, zinc, etc. . . . et l'on fait réagir ces deux solutions en présence d'un liquide organique polaire miscible, lequel peut être apporté soit avec l'une des deux solutions, soit séparément. Dans le cas des compositions verrières, la solution alcaline comprend les oxydes formateurs, silice, bore, alumine, etc. . . . alors que la solution acide renferme les autres oxydes, et notamment les oxydes modificateurs.

Selon l'invention, l'on peut obtenir une composition de silicates métalliques très intime, en procédant à un échange de plusieurs cations, ce qui du point de vue du priduit conduit à une homogénéité de nature chimique et non plus seulement physique, et du point de vue procédé, permit d'opérer en une seule étape, ce qui implique des économies tant d'investissement que de fonctionnement. La présente invention présente un intérêt tout particulier dans le cas où l'on veut obtenir des silicates double, triple ou plus de manière très simple et présentant une grande homogénéité.

Par ailleurs, l'on observe que les impuretés peuvent être éliminées de manière plus facile que selon les procédés de l'art antérieur en les faisant passer dans la phase aqueuse, au besoin sous forme de complexes solubles.

Les solutions aqueuses de silicates de départ sont notamment constituées par des silicates de sodium et de potassium. Eventuellement, ces solutions peuvent contenir des adjuvants tels que des complexants spécifiques de manière à faciliter l'élimination de certaines impuretés, telles que de métaux lourds comme le fer, tel que le tiron, c'est-à-dire, le dihydroxy-1,2, benzène disulfonate-3,5 de sodium, et aussi des additifs et adjuvants.

Le liquide organique polaire miscible à l'eau peut être constitué par un alcool, et notamment par l'alcool méthylique.

Comme dit précédemment, dans le cas où l'on veut obtenir de la silice, l'on traite la solution aqueuse de silicate alcalin, additionnée de méthanol, par un agent d'acidification. Celui-ci peut être constitué par un acide minéral, ou organique.

Selon le procédé de l'invention, un mélange à comportement eutectique peut être obtenu de la manière simple suivante:

On détermine d'abord le rapport molaire de la solution de silicate alcalin à partir de laquelle seront précipités les silicates métalliques composant le mélange.

Ce rapport est:

$$Rm = \frac{\text{Concentration molaire de l'oxyde formateur } SiO_2}{\text{Somme des concentrations molaires } K_2O, Na_2O \dots PbO, CaO, ZnO \dots}$$

Dans le cas où sont présents d'autres oxydes formateurs tels que $B_2O_3$, $P_2O_5$ ou $Al_2O_3$, on peut envisager soit la fabrication de solution alcaline: borate de sodium, phosphate de sodium ou aluminate de sodium, soit l'addition sous forme acide en solution de l'acide borique ou phosphorique. Le cas de $Al_2O_3$ est différent, sa forme acide n'étant pas soluble, on peut alors faire appel au nitrate d'aluminium soluble dans l'eau en fonction de la demande choisie pour introduire ces oxydes, le calcul de Rm sera corrigé.

On préparera alors la solution alcaline de rapport:

$$Rm = \frac{SiO_2}{Na_2 \text{ ou } K_2O}$$

et la solution de mélanges de sels d'oxydes en milieu acide, acide nitrique par exemple.

Le schéma global de la réaction est le suivant:

$$\text{sels métalliques} + \text{silicate alcalin} \xrightarrow{\text{méthanol}} \text{silicates métalliques} + \text{sel alcalin.}$$

On obtient ainsi une suspension qu'il suffit de filtrer. Sur le filtre, on récupère un solide que l'on lave pour éliminer le sel alcalin qui est sous forme soluble. On remarque que les éléments métalliques ont été combinés simultanément sous forme de silicates de même rapport molaire.

Si le mélange comprend des borates phosphates ou aluminates, on forme de la même manière, des borates phosphates ou aluminates métalliques généralement insolubles dans les eaux mères.

Ce solide peut être utilisé tel quel sous forme humide, il peut être séché ou vitrifié suivant l'application à laquelle il est destiné. Pour le vitrifier, il faut le porter à une température légèrement supérieure à la température où il peut se transformer en verre de manière irréversible.

Le sel du ou des métaux de substitution n'a pas besoin d'être en excès, il peut même être en défaut car la réaction d'échange est totale, ce qui est un avantage considérable dans le cas de composition à base de plomb, car l'on ne retrouve plus l'excès de plomb nécessaire à la réaction, dans les eaux-mères, ce qui permet d'avoir un rendement complet de la réaction, d'éliminer les risques de pollution et de pouvoir récupérer facilement le sous produit, nitrate alcalin par exemple, d'une grande pureté.

De manière générale, les réactifs doivent être amenés de manière à observer la formation d'une suspension très fine du silicate.

Selon une forme première de mise en oeuvre non limitative de l'invention, on forme tout d'abord un pied de cuve avec une solution de silicate, puis on ajoute le liquide organique polaire, et ensuite éventuellement les solutions aqueuses d'acide et de sels des métaux de substitution.

La concentration en réactif n'est limitée que par la saturation en ces réactifs dans le milieu à température donnée, laquelle se situe de préférence au voisinage de la température ambiante.

Par ailleurs, le liquide polaire peut être recyclé après séparation, par exemple par filtration des

3

phases solides et liquides.

Avantageusement, selon cette forme de réalisation, la quantité de méthanol par rapport au métal alcalin de départ, est sensiblement égale ou supérieure à la quantité de solide obtenue.

Selon une autre forme de mise en oeuvre, on forme une solution organique notamment méthanolée du groupe des sels de métaux à laquelle l'on ajoute la solution de silicate(s) alcalins(s).

On observe alors que l'on peut réaliser une addition rapide de la solution de silicate(s) dans la solution organique telle que méthanolée de nitrate de plomb par exemple.

Par ailleurs, d'un point de vue de la réalisation industrielle, on peut se satisfaire d'une agitation moins importante, ce qui constitue une économie d'énergie.

Selon cette forme de mise en oeuvre, l'on a aussi observé que l'on pouvait améliorer l'homogénéité du produit et diminuer l'humidité du produit en travaillant avec un excès de liquide organique polaire par rapport au métal, avantageusement alcalin (ou aux métaux alcalins) correspondant entre une fois et demie et trois fois la quantité de solide obtenu.

On sait en particulier que dans une composition classique pour verre, les divers constituants ont tendance à se comporter comme s'ils étaient seuls, la composition ne devenant homogène qu'au moment de la fusion, qui se fait à température élevée.

Or, la composition obtenue par le procédé selon l'invention se présente comme homogène et l'on pense que l'on est en présence d'un parfait mélange eutectique comme le laisse supposer l'analyse thermique différentielle.

Par ailleurs, le point de fusion est abaissé par rapport à un mélange classique. Or, on sait qu'un problème important en verrerie est la fusion complète des grains de silice que l'on obtient en rajoutant beaucoup de fondants notamment sous forme de dérivés alcalins. Ce procédé permet d'ajuster d'une manière simple et tout à fait nouvelle, les teneurs en éléments fondants. Il suffit alors de se référer aux diagrammes qui indiquent pour une composition donnée, la température de fusion que l'on souhaite obtenir.

De plus, on remarque que la phase d'affinage commence beaucoup plus tôt puisque le verre est déjà formé dès que la température de fusion de l'eutectique est atteinte. De ce fait, en ajoutant un affinant qui se décompose à une température légèrement supérieure à celle de fusion, on note la formation rapide de grosses bulles qui s'éliminent très facilement, ce phénomène permet d'avoir une température d'affinage beaucoup plus basse car la grosseur des bulles est telle que l'affinage du verre peut se produire à des viscosités élevées, c'est-à-dire, à des températures plus faibles.

Les produits obtenus par le procédé selon l'invention peuvent être proposés pour de nombreuses applications.

— Comme dit précémment dans l'industrie verrière, ils permettent d'obtenir des verres de très bonne qualité: homogènes, exempts d'impuretés et de composition très précise. La technique de fabrication est simplifiée, nécessite des temps de préparation beaucoup plus courts que par la technique actuelle, d'où des économies d'énergie importantes.

— Par aillerus, cette technique de fabrication autorise une utilisation plus large de matières premières naturelles. En effet, de nombreux oxydes modificateurs existent à l'état naturel mais ils se trouvent combinés dans des teneurs très variables et surtout contiennent des impuretés indésirables. De simples traitements faisant appel d'abord à l'hydrométallurgie, puis ensuite aux techniques de séparation ou de purification, permettent d'obtenir directement les solutions de ces oxydes qui entrent dans le procédé proposé.

Dans ce cas, la démarche pour obtenir un verre de qualité est tout à fait nouvelle. En particulier, les proportions d'oxydes doivent être préalablement étudiées en fonction du minerai et des traitements chimiques possibles en considérant d'abord le critère économique. Il faut également respecter les propriétés fondamentales du verre, notamment celles nécessaires à la qualité et aux transformations, soit manuelles soit mécaniques, c'est-à-dire: indice de réfraction, teinte, palier de travail, aplitude à la taille et à la gravure.

Si on prend comme exemple la fabrication d'article en cristal contetant plus de 24% de PbO, on doit partir de minerai de plomb ou de concentré de plomb obtenu après flottation. Mais il existe plusieurs minerais de qualité différente: dans premier temps, il est donc nécessaire:

— d'étudier le traitement hydrométallurgique approprié;
— de déterminer la composition exacte de la solution issue du traitement.

Ensuite, on met en oeuvre les techniques de séparation pour éliminer les oxydes indésirables; en général, ce sont les oxydes colorants $Fe_2O_3$, $FeO$, $CuO$, $NiO$, etc. . . . Après, on dispose d'une solution riche en $PbO$, mais contenant d'autres oxydes tels que $ZnO$, $CaO$, $BaO$, etc. . . . qui peuvent jouer un rôle favorable à l'élaboration du verre. On aboutit ainsi à une composition propre au minerai étudié. L'intérêt économique du procédé est d'utiliser directement cette solution. Et il suffit alors de déterminer la proportion des autres oxydes $SiO_2$, $B_2O_3$, $Na_2O$, $K_2O$, $LiO$ pour satisfaire les propriétés au cristal; ce choix peut être guidé par l'allure de la courbe de viscosité du verre en fonction de la température.

# 0 044 236

La composition finale du verre étant fixée, il suffit de:

— fabriquer les solutions alcalines au bon rapport molaire;
— prendre la solution purifiée issue du traitement hydrométallique, modifiée ou non suivant le cas;
— mettre en oeuvre le procédé déjà décrit précédemment.

Pour les verres à base de produits toxiques tels que le plomb, le produit vitrifié élimine pratiquement tout risque de pollution. Enfin, on peut envisager de formuler de nouveaux verres contenant moins d'éléments alcalins.

— Dans l'industrie des revêtements à base de produits minéraux: céramiques, aciers verres, etc. ... de tels mélanges permettent de nouvelles techniques de fabrication, le verre hydraté peut se combiner chimiquement au support et améliorer les propriétés mécaniques.
— Dans l'industrie des catalyseurs minéraux à base de silice, on peut mettre à profit une des propriétés du mélange de silicates qui peut mousser los de la vitrification. On peut ainsi obtenir des silicates métalliques à grande surface spécifique. Le moussage est créé par les réactions de condensation et par l'élimination de l'air occlus à des températures particulières.
— Dans l'industrie des colles, ces produits peuvent être utilisés comme liant à haute température. Ils trouvent une application très fiable dans le traitement de déchets minéraux toxiques que l'on peut aisément et rapidement vitrifier.

Mais la présente invention sera plus aisément comprise à l'aide des exemples suivants donnés à titre indicatif mais nullement limitatif.

## Exemple 1

Silicate triple de potassium, de plomb et de calcium. Dans un réacteur de 600 litres, on met 200 kg de silicate de potassium en solution contenant 21,2% de $SiO_2$ et 8,8% de $K_2O$. On ajoute à 20°C, sous agitation 80 kg de méthanol et on ajoute une solution de nitrate de plomb et de calcium contenant respectivement:

— 19,4 kg de $Pb(NO_3)_2$
—  9,6 kg de $Ca(NO_3)_2$
— 71,0 kg d'eau.

On obtient une suspension composée de:

— 19,5 kg de silicate de potassium solide,
— 17,4 kg de silicate de calcium solide
— 27,2 kg de silicate de plomb solide
—  0,5 kg de silicate de potassium soluble
— 23,7 kg de nitrate de potassium soluble
— 211,0 kg d'eau
— 80,0 kg de méthanol.

Après filtration, lavage à l'eau méthanolée (26% de méthanol) et séchage, on obtient une poudre homogène constituée d'un mélange très intime de silicate de potassium, de plomb et de calcium. Cette poudre mise en suspension dans un liquide de densité 3, densité intermédiaire entre d'une part, le silicate de potassium et de calcium et d'autre part le silicate de plomb, ne se sépare pas par gravité; elle reste entièrement en surface. On note également que ces silicates ont le même rapport molaire.

L'invention s'applique à d'autres silicates solubles: lithium, potassium, sodium ou silicate d'ammonium quaternaire, à d'autres solutions de sels métalliques anions ou cations: exemple nitrate de baryum, nitrate d'aluminium, chlorure de calcium, sulfate ferreux.

## Exemple 2

Obtention d'un verre de composition

| | | |
|---|---|---|
| $SiO_2$ | = | 57,0% |
| PbO | = | 29,5% |
| $K_2O$ | = | 12,1% |
| $Na_2O$ | = | 2,0% |
| $Sb_2O_3$ | = | 0,4% |

A partir de cette composition, on détermine les caractéristiques des solution de silicates alcalins qui seront utilisées comme matières premières. Par ailleurs, on fixe à 1% de $K_2O$, la quantité de cet élément à amener sous forme nitrate pour l'affinage.

On trouve donc un mélange de silicates métalliques dont le rapport molaire est égal à:

$$Rm = \frac{\dfrac{57}{60,08}}{\dfrac{29,5}{223,19} + \dfrac{II,I}{94,2} + \dfrac{2}{61,98}} \simeq 3,3$$

Ainsi, on prépare deux solutions de silicates alcalins, la première contient 20,3% de $SiO_2$ et 9,66% de $K_2O$, la deuxième 26,7% de $SiO_2$ et 8,33% de $Na_2O$.

L'oxyde de plomb, dans le procédé, est amené sous forme de nitrate de plomb en solution, soit par attaque directe du plomb métal par l'acide nitrique dilué de 15 à 25%, soit par dissolution de l'oxyde dans l'acide nitrique.

Pour obtenir 25 kg de verre, le mode opératoire de fabrication se déroule de la manière suivante à température ambiante.

Dans un réacteur de 200 l muni d'un agitateur, on verse 31,27 kg d'une solution de nitrate de plomb contenant 35% de sel. On ajoute 50 kg de méthanol. On laisse agiter quelques minutes, puis on coule en 60 minutes 60,8 kg de la solution de silicate de potassium définie plus haut. On laisse agiter encore deux heures et on filtre la suspension. On récupère:

— d'une part un gâteau humide qui après lavage est composé de:

21,6 kg de silicate mixte de potassium et de plomb,
0,54 kg de nitrate de potassium,
22,0 kg d'eau méthanolée.

— d'autre part, des eaux-mères et des eaux de lavage; soit:

6,14 kg de nitrate de potassium, et
120,0 kg d'eau méthanolée.

Le gâteau est séché à 200°C en étuve. On récupère ainsi 24 kg de produit. Ensuite, on prépare le mélange suivant das un malaxeur:

24,0 kg de silicate mixte de potassium et de plomb,
0,1 kg d'oxyde d'antimoine,
6,p kg de solution de silicate de sodium définie plus haut.

Ce mélange est alors aggloméré par pressage afin de le rendre non poussiéreux. On peut éventuellement sécher les agglomérés dans une étuve à 200°C.

Ces agglomérés sont alors introduits dans un pot maintenu à 1350°C. Au bout de 5 heures de fusion, le verre contient moins de 1 bulle/cm³, ce qui montre la rapidité de l'affinage. Deux heures suffisent ensuite pour obtenir un verre très fin et très homogène.

On a fait figurer en annexe:

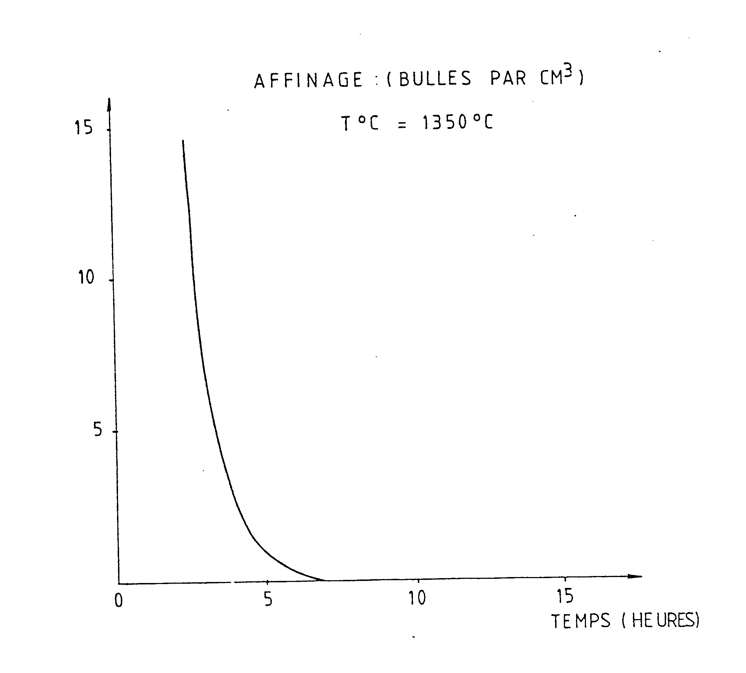

fig. 1, la courbe d'affinage à 1350°C qui permet de mettre en évidence le temps très court pour ce type d'opérations,

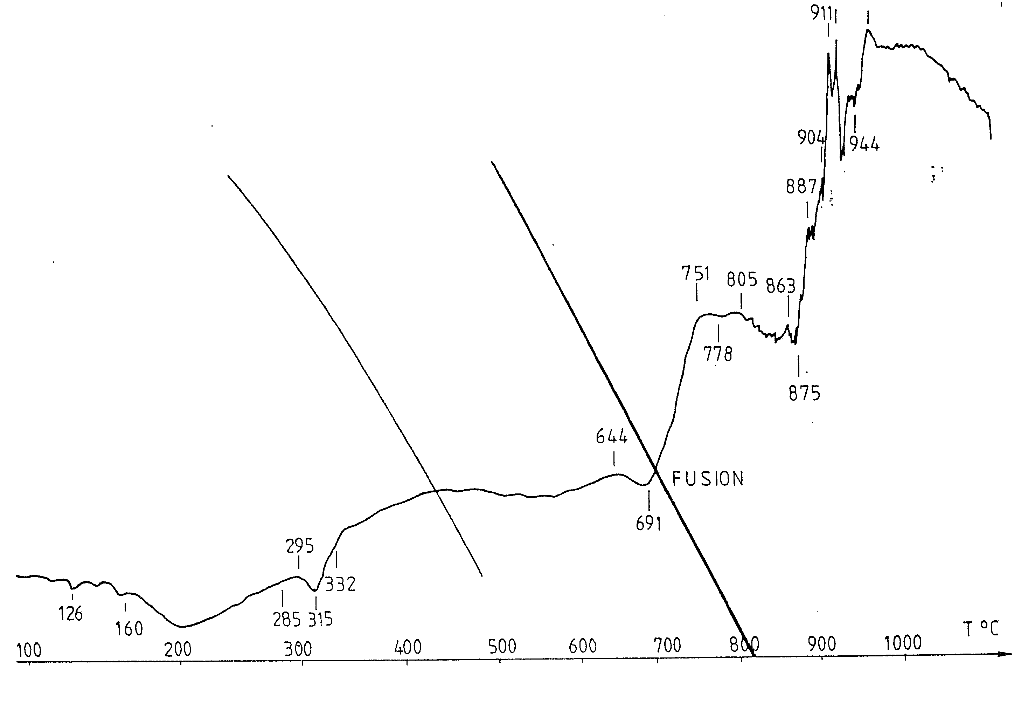

fig. 2, une courbe d'analyse thermique différentielle,

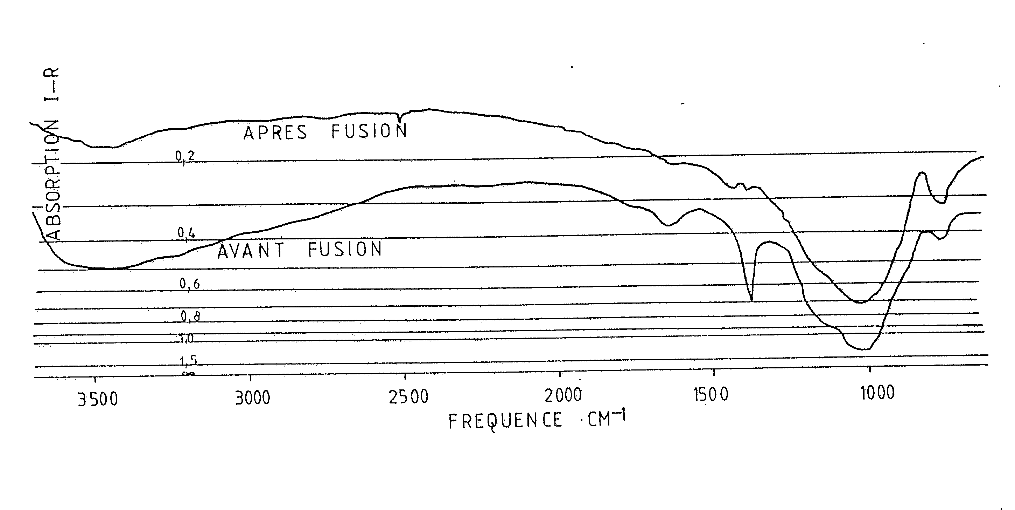

fig. 3, une courbe d'absorption d'infra-rouge.

Les analyses physico-chimiques de la poudre avant fusion, révèlent des propriétés spécifiques. En particulier, l'analyse thermique différentielle montre, outre le départ de l'eau plus ou moins combiné étalé entre 20°C et 500°C, que se produit vers 700°C une transformation légèrement endothermique correspondant à la vitrification complète de la poudre. Le spectre infra-rouge réalisé à partir d'une pastille de KBr contenant 2% de poudre selon l'invention, montre bien que exception faite de la présence d'eau et de nitrate de potassium, la structure de celui-ci est proche de celle du verre. De même, l'analyse chimique du mélange amorphe porté à différentes températures pendant 12 heures révèle la transformation physicochimique. En effet, en étudiant la solubilité du composé dans l'acide nitrique à 100°C en fonction de la température de séchage ou cuisson, on note une importante diminution entre 600 et 700°C:

| Température | Pourcentage de PbO soluble dans HNO$_3$ à 10% (100°C) | Pourcentage de K$_2$O soluble dans HNO$_3$ à 10% (100°C) |
|---|---|---|
| 200° | 95% | 90% |
| 500° | 86% | 87% |
| 600° | 36% | 75% |
| 700° | 6% | 30% |
| 800° | 5% (I) | 29% (I) |

(I) Ces valeurs sont également celles que l'on trouve après attaque nitrique de verre broyé (verre fondu à 1300°C).

Exemple 3

On part d'un minerai sulfuré ou carbonaté concentré contenant principalement:

75% de PbO
3% de ZnO
2% de CaO
1% de MgO
0,1% de CuO
0,1% de Fe$_2$O$_3$
+ silice + insolubles + impuretés à l'état de traces.

On réalise une attaque nitrique de ce concentré. On met en solution une très forte proportion de ces oxydes. Un excès d'acide est nécessaire en raison des réactions réductrices inévitables entre les sulfures souvent présents et l'acide.

Dans 410 g d'acide nitrique dilué à 20%, on ajoute 120 g de concentré, on récupère après filtration, une solution contenant:

24% de nitrate de plomb
1,5% de nitrate de zinc
1,3% de nitrate de calcium
0,8% de nitrate de magnesium
+ 220 ppm (parties par million) de CuO et 220 ppm de Fe$_2$O$_3$.

L'oxyde de cuivre est éliminé par dépôt électrolytique sur le plomb et l'oxyde de fer par précipitation de l'hydroxyde à pH 3,5.

On obtient ainsi une solution contenant uniquement des oxydes modificateurs non colorants.

C'est cette solution que l'on peut utiliser dans le procédé pour fabriquer le verre souhaité.

**Revendications**

1. Procédé pour la préparation de silicate métallique d'un métal alcalin et d'au moins un autre métal, par réaction d'une solution aqueuse d'un silicate de métal alcalin et d'une solution d'un sel d'au moins un autre métal, caractérisé par le fait que la réaction est effectuée par mélange des deux solutions, sous agitation, en présence d'un liquide organique polaire miscible, de manière à amener le silicate en suspension dans le milieu organique.

2. Procédé selon la revendication 1, caractérisé par le fait qu'on réalise une solution organique d'un sel d'au moins un autre métal, à laquelle on ajoute la solution de silicate (s) alcalin (s).

3. Procédé selon la revendication 1, caractérisé par le fait que le liquide organique est apporté directement à la solution de silicate.

4. Procédé selon l'une des revendications 1 à 3, caractérisé par le fait que le liquide organique polaire est constitué par du méthanol.

5. Procédé selon l'une des revendications 1 à 4, caractérisé par le fait que la source de l'autre métal est constituée par une matière minérale naturelle.

6. Procédé selon l'une des revendications 1 à 5, caractérisé par le fait que le rapport molaire

SiO$_2$/oxyde de métal alcalin dans le silicate de départ est déterminé de manière à être égal au rapport molaire SiO$_2$/somme des concentrations molaires des oxydes métalliques tels que K$_2$O, Na$_2$O, PbO, CaO, ZnO, dans la composition finale du silicate obtenu.

7. Application du procédé selon la revendication 6 à la fabrication d'une composition verrière dont l'oxyde formateur est constitué par de la silice.

## Patentansprüche

1. Verfahren zur Herstellung eines Metallsilicats eines Alkalimetalls und mindestens eines weiteren Metalls durch Umsetzung einer wäßrigen Lösung eines Alkalimetallsilicats mit einer Lösung eines Salzes mindestens eines anderen Metalls, dadurch gekennzeichnet, daß man die Umsetzung durch Vermischen der beiden Lösungen unter Rühren in Gegenwart einer mischbaren polaren organischen Flüssigkeit, so daß das Silicat in dem organischen Medium suspendiert wird, bewirkt.

2. Verfahren nach Anspruch 1, dadurch gekennzeichnet, daß man eine organische Lösung eines Salzes mindestens eines weiteren Metalls herstellt, der man die Lösung des Alkalisilicats bzw. der Alkalisilicate zusetzt.

3. Verfahren nach Anspruch 1, dadurch gekennzeichnet, daß die organische Flüssigkeit direkt zu der Silicatlösung zugegeben wird.

4. Verfahren nach einem der Ansprüche 1 bis 3, dadurch gekennzeichnet, daß die organische polare Flüssigkeit Methanol ist.

5. Verfahren nach einem der Ansprüche 1 bis 4, dadurch gekennzeichnet, daß die Quelle des anderen Metalls eine natürliche mineralische (anorganische) Quelle ist.

6. Verfahren nach einem der Ansprüche 1 bis 5, dadurch gekennzeichnet, daß das Molverhältnis SiO$_2$/Alkalimetalloxid im Ausgangs-Silicat so festgelegt wird, daß es gleich ist dem Molverhältnis SiO$_2$/Summe der molaren Konzentrationen der Metalloxide wie K$_2$O, Na$_2$O, PbO, CaO, ZnO in der Zusammensetzung des als Endprodukt erhaltenen Silicats.

7. Anwendung des Verfahrens nach Anspruch 6 zur Herstellung einer glasbildenden Masse, in der das Netzwerk bildende Oxid Kieselsäure ist.

## Claims

1. A process for the preparation of metallic silicate from an alkali metal and at least one other metal, by the reaction of an aqueous solution of an alkali metal silicate and a solution of a salt of at least one other metal, characterized in that the reaction is carried out by mixing the two solutions, with agitation, in the presence of a miscible polar organic liquid, so as to put the silicate in suspension in the organic medium.

2. A process according to claim 1, characterized by making an organic solution of a salt of at least one other metal, to which the solution of alkali metal silicate or silicates is added.

3. A process according to claim 1, characterized in that the organic liquid is added directly to the silicate solution.

4. A process according to one of claims 1 to 3, characterized in that the polar organic liquid comprises methanol.

5. A process according to one of claims 1 to 4, characterized in that the source of the other metal comprises a natural mineral material.

6. A process according to one of claims 1 to 5, characterized in that the molar ratio of SiO$_2$/alkali metal oxide in the initial silicate is such as to be equal to the molar ratio of SiO$_2$/sum of the molar concentrations of the metal oxides such as K$_2$O, Na$_2$O, PbO, CaO and ZnO, in the final composition of the silicate produced.

7. Use of the process according to claim 6 for the production of a glassmaking composition in which the glass former oxide comprises silica.

AFFINAGE : (BULLES PAR CM$^3$)

T°C = 1350°C

TEMPS ( HEURES)

APRES FUSION

AVANT FUSION

ABSORPTION I-R

0,2

0,4

0,6

0,8

1,0

1,5

FREQUENCE ·CM⁻¹

3500    3000    2500    2000    1500    1000

0 044 236